Europäisches Patentamt

European Patent Office

Office européen des brevets

(11) Publication number: **0 376 458**
**A2**

(12) # EUROPEAN PATENT APPLICATION

(21) Application number: **89311621.0**

(22) Date of filing: **09.11.89**

(51) Int. Cl.5: **B62D 5/04, B62D 7/14**

(30) Priority: **30.12.88 US 292178**

(43) Date of publication of application:
**04.07.90 Bulletin 90/27**

(84) Designated Contracting States:
**DE FR GB**

(71) Applicant: **FORD MOTOR COMPANY LIMITED**
**Eagle Way**
**Brentwood Essex(GB)**

(84) **GB**

Applicant: **FORD FRANCE S. A.**
**B.P. 307**
**F-92506 Rueil-Malmaison Cédex(FR)**

(84) **FR**

Applicant: **FORD-WERKE**
**AKTIENGESELLSCHAFT**
**Werk Köln-Niehl Henry-Ford-Strasse**
**Postfach 60 40 02**
**D-5000 Köln 60(DE)**

(84) **DE**

(72) Inventor: **Oslapas, Algis**
**6904 Lafayette**
**Dearborn Heights Michigan 48127(US)**

(74) Representative: **Messulam, Alec Moses et al**
**A. Messulam & Co. 24 Broadway**
**Leigh on Sea Essex SS9 1BN(GB)**

(54) Steering gear and system for automotive vehicle.

(57) A steering gear for an automotive vehicle includes a linear electric motor (37) having a plunger (38) linked to an axle set of roadwheels with a vehicle and a controller (56) for operating the linear motor. The controller (56) may include sensors for torque applied to a steering shaft attached to a steering handwheel operated for the driver and for also sensing vehicle speed. A controller (56) and steering gear (10) according to the present invention may be used with four-wheel steering systems in which no mechanical link is provided between the front steering gear and the rear steering gear.

FIG.2

## STEERING GEAR AND SYSTEM FOR AUTOMOTIVE VEHICLE

This invention relates to a steering gear and control system for an automotive vehicle.

Power assisted steering systems have been widely employed in automotive vehicles for a number of years. One common type of power assisted steering utilises a hydraulic pump driven by the crankshaft of the vehicle engine, with the pump being operatively connected with the steering gear so as to provide hydraulic boost to the driver's steering effort. Electrically driven power assist systems are also known. An example of such a system is disclosed in U.S. Patent 4,785,901. Electrically driven power assist systems commonly utilise control algorithms having as their inputs steering driveshaft torque and vehicle velocity. The torque sensor is adapted to respond to the steering load and the speed sensor is adapted to respond to the speed of the vehicle. Electrically powered steering systems also commonly utilise a control module for operating the electric prime mover. The electric prime movers commonly comprise geared rotary types of motors. Such gearing is costly and often quite complex. It is an advantage of the present invention that all such motor gearing and the rotary motor itself are replaced with a linear motor having but a single major moving component.

According to the invention there is provided a steering gear for a vehicle, as hereinafter set forth in Claim 1.

The controller preferably comprises means for sensing torque applied to a steering shaft attached to a steering handwheel operated by the driver of the vehicle and means for generating a control signal for said linear motor based upon the sensed torque. The controller may further comprise means for sensing the forward velocity of the vehicle and for generating a control signal for the linear motor based upon the sensed velocity.

In the event that a steering gear is employed as a rear wheel steering gear, the controller preferably comprises means for sensing the operational position of a front wheel steering gear controlled by the driver of the vehicle and means for generating a position signal for the linear motor of the rear steering gear based upon the position of the driver-controlled steering gear.

A linear electric motor equipped steering gear may also be used as a driver-controlled steering gear. In such case, the plunger of the linear electric motor will include a geared rack. The controller in such case may comprise means for sensing torque applied to a steering shaft geared to the rack and attached to a steering handwheel operated by the driver of the vehicle. In such case, the control means will generate a control signal based upon sensed torque.

According to yet another aspect of the present invention, a steering system for a vehicle comprises a first steering gear linked to a first axle set of roadwheels, with said steering gear being operated by the driver of the vehicle, and a second steering gear driven by a linear electric motor and linked to a second axle set of roadwheels. Said steering system further comprises a controller for operating the linear motor, with the controller including, without limitation, detection means for detecting the operating position of the driver-controlled steering gear, and signal generation means for generating a position signal for the linear motor based at least upon the detected position of the first steering gear. In the event that the first steering gear includes a linear electric motor as the prime mover, the controller will further preferably comprise means for sensing torque applied to a steering shaft interposed between the first steering gear and the steering handwheel operated by the driver of the vehicle, and means for sensing the velocity of the vehicle. Finally, the controller will include means for generating a control signal for the linear motor of the first steering gear.

The invention will now be described further, by way of example, with reference to the accompanying drawings, in which :

Figure 1 is a perspective view of an automotive vehicle incorporating a steering gear and system according to the present invention.

Figure 2 is a partially schematic view of a steering gear incorporating a linear motor embodying the the present invention.

Figure 3 is a schematic representation of a driver-controlled steering gear incorporating a linear motor embodying the present invention.

Figure 4 is a system block diagram showing the component parts of a four wheel steering system employing a linear motor embodying the present invention.

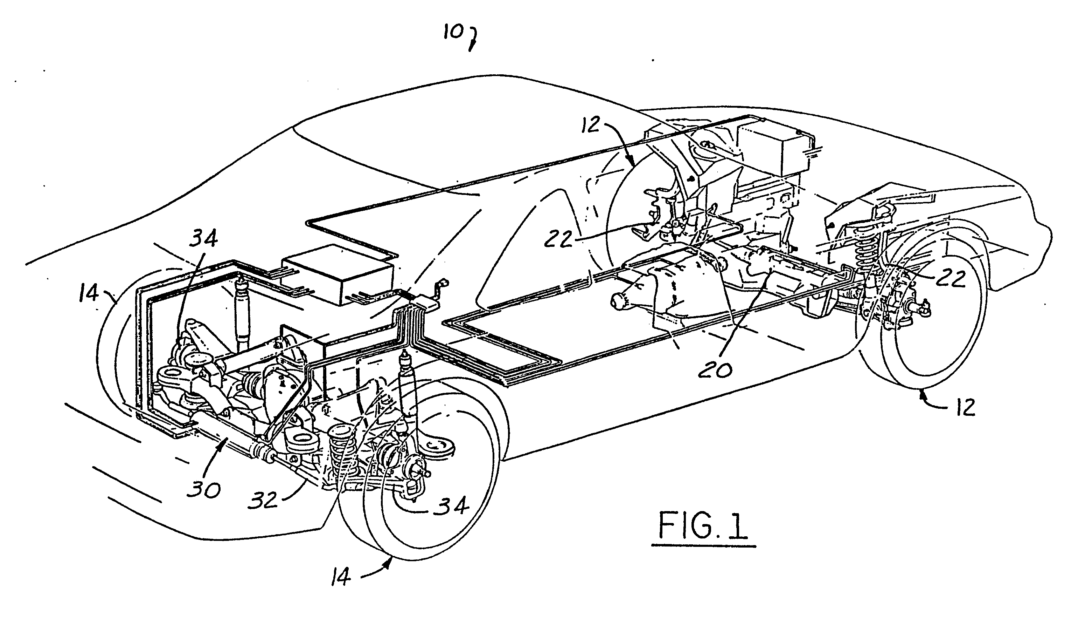

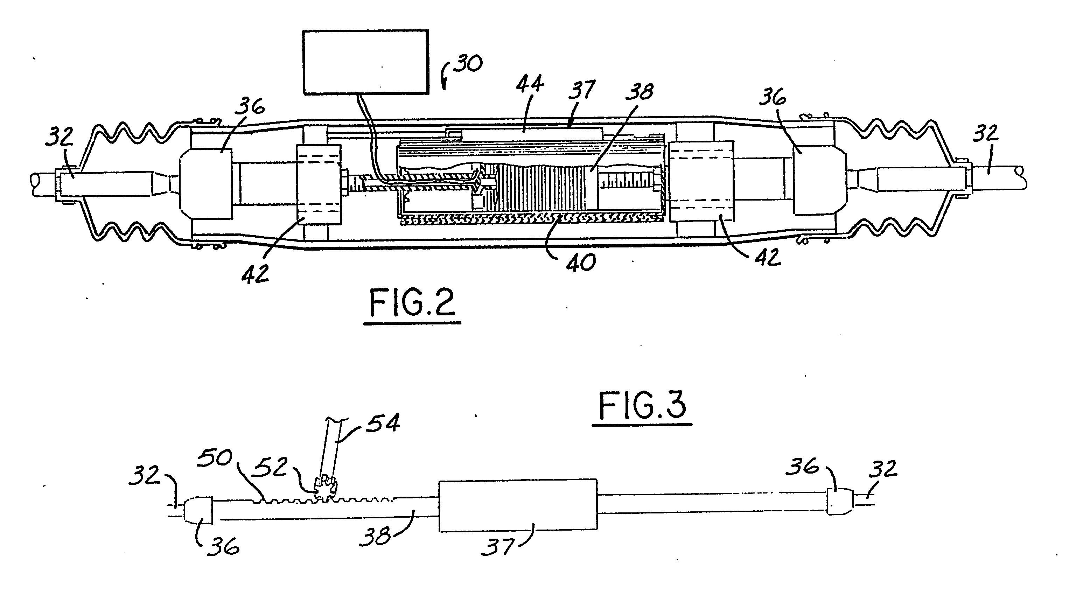

As shown in Figure 1, vehicle 10 is equipped with front roadwheels 12 and rear roadwheels 14. The front roadwheels are steered by front steering gear 20, whereas the rear roadwheels are steered by rear steering gear 30. Front steering gear 20 operates roadwheels 12 by providing steering inputs to front spindles 22 via tierods (not shown). Conversely, rear steering gear 30 provides steering inputs to rear spindles 34 by means of tierods 32. Tierods 32 are shown as extending from steering gear 30 in Figure 2. Steering gear 30 comprises inner tierod ends 36 which provide a pivotable attachment for joining the balance of the steering gear to tierods 32. Steering gear 30 further comprises linear electric motor 37, which includes plunger 38. The plunger is mounted reciprocably within stator 40.

Linear motor 37 is an induction motor in which only plunger 38 is wound. Hollow stator 40 comprises a conductive metallic structure which carries induced currents. Force in an induction motor is caused by the interaction between an applied magnetic field in one member (in this case, the plunger), and currents induced in the conductor of a second member (in this case, the stator) on the other side of a separating air gap. Plunger 38 is attached at its extreme ends to inner tierod ends 36. Plunger 38 conventionally comprises lamination packs, steel coils, magnet wire coils, end caps, and a central shaft through which wires are conducted to system control module 56. As noted above, plunger 38 is slidably carried within stator 40, which is mounted rigidly to the chassis of vehicle 10. Stator 40 comprises a bimetallic tube having an aluminium inner surface and a steel outer surface. The two sleeves are assembled and then the inner bore is honed for straightness.

In response to signals from system control module 56, plunger 38 will be caused to move reciprocably within stator 40, and as a result the roadwheels which are attached to the spindles steered by tierods 32 will in turn be steered. Linear motor 37 further includes resolver 44 which performs two functions in conjunction with control module 56. The first function performed jointly by the resolver and the control module is electronic commutation of linear motor 37. In other words, resolver 44 allows system control module 56 to know the position of plunger 38 within stator 40 so that appropriate currents may be supplied to the plunger's windings. The second function performed by the resolver and control module stems from the first function. The second function encompasses the notion that the resolver allows the system control module to know the precise position of the plunger at all times so that the steering condition of the roadwheels steered by the present steering gear will be known by the system control module. As a result, the control module will have information necessary to allow operation of the system. More specifically, resolver 44 will advise control module 56 whenever the plunger has come to the end of its travel in either direction, as well as keeping precise track of the location of the plunger at any intermediate position.

The control module comprises a microprocessor including a ROM in which is stored various constants and control programs for controlling the steering gear. The microprocessor further includes a CPU for reading out control programs from the ROM so as to execute required operations and a RAM which temporarily stores various data related to the operations to be executed within the CPU and which allows the CPU to read out the data stored therein. Finally, the control module includes input-output devices and power supplies for operating linear motor 37.

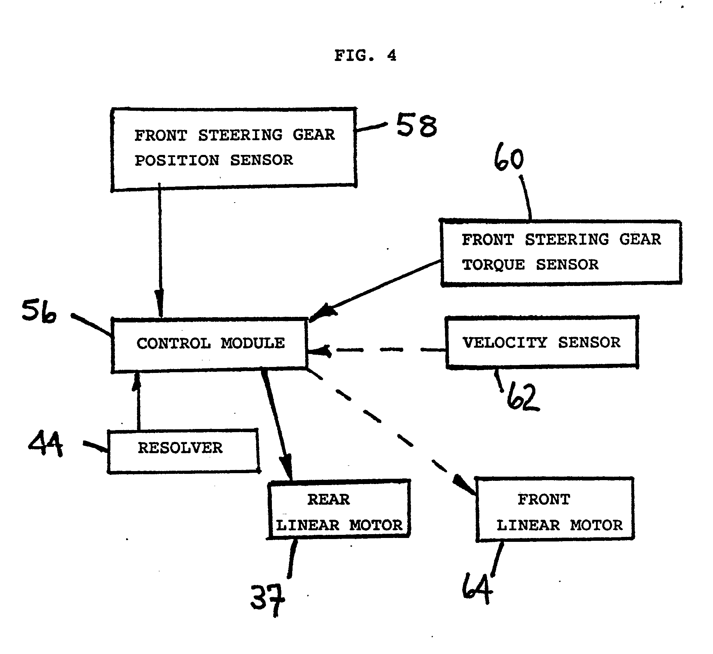

A second type of steering gear employing a linear motor is illustrated in Figure 3. Plunger 38 is equipped with gear teeth 50, which mesh with pinion 52 mounted at the end of steering shaft 54. Thus, as the steering shaft is rotated by the driver of the vehicle, pinion 52 will transmit force to plunger 38. This force will directly result from torque imposed on the steering shaft from the driver. This torque is sensed by front steering gear torque sensor 60 (Figure 4). The value of the sensed torque is one of the parameters which may be used by control module 56 to operate front linear motor 64. Because the steering gear of Figure 3 is directly operable by means of a steering shaft, this gear may be used as steering gear 20 at the front position of vehicle 10.

In the event that a steering gear having a linear electric motor as its prime mover is used for the purpose of steering the rear wheels of a vehicle according to the present invention in conjunction with a conventional front steering gear, system control module 56 will receive inputs only from front steering gear position sensor 58, which detects the steering operating position of the front wheels, and resolver 44. If, however, both front and rear steering gears are equipped with linear electric motors, system control module 56 will receive further inputs from front steering gear torque sensor 60 and vehicle velocity sensor 62. The inputs from front steering gear torque sensor 60 and velocity sensor 62 will permit control module 56 to operate front steering gear linear motor 64 by providing a motor control signal dependent upon the driver's torque input to the steering shaft and the speed of the vehicle.

Those skilled in the art will appreciate in view of this disclosure that a variety of known control algorithms could be employed for linking the front and rear steering gears of a vehicle using linear motors according to the present invention. For example, the rear steering gear could be operated so as to steer the rear wheels out of phase at lower speeds, neutrally at medium speeds, and in phase with the front wheels at higher road speeds. It should be understood that the control scheme chosen for the front steering gear will depend upon the individual dictates of the vehicle being considered for such a system. Similarly, the precise form of linear motor chosen for implementing a system according to this invention may change with the individual requirements of the vehicle. For example, the stator and plunger could both be wound, or the stator only could be wound, with the plunger comprising a permanent magnet.

## Claims

1. A steering gear for a vehicle, comprising, a linear electric motor (37) having a plunger (38) linked to an axle set of roadwheels of said vehicle, and a controller (56) for operating said linear motor.

2. A steering gear according to Claim 1, wherein said controller comprises means for sensing torque applied to a steering shaft attached to a steering handwheel operated by the driver of said vehicle and means for generating a control signal for said linear motor based upon said sensed torque.

3. A steering gear according to Claim 1, wherein said controller comprises means for sensing the forward velocity of said vehicle and for generating a control signal for said linear motor based upon said sensed velocity.

4. A steering gear according to Claim 1, wherein said steering gear comprises a rear wheel steering gear and said controller comprises means for sensing the operational position of a front wheel steering gear controlled by the driver of said vehicle and for means for generating a position signal for said linear motor based upon the position of said driver-controlled steering gear.

5. A steering system for a vehicle according to Claim 1, wherein said linear electric motor further comprises a stator attached to the chassis of said vehicle, with said plunger being slidably housed within said stator.

6. A steering gear for an automotive vehicle, comprising, a geared rack linked to a pair of roadwheels of said vehicle, with said rack comprising the plunger of a linear electric motor, and a controller for operating said linear motor.

7. A steering gear according to Claim 6, wherein said controller comprises means for sensing torque applied to a steering shaft geared to said rack and attached to a steering handwheel operated by the driver of said vehicle and for generating a control signal based upon said sensed torque.

8. A steering system for a vehicle, comprising, a first steering gear linked to a first axle set of roadwheels, with said steering gear being operated by the driver of said vehicle, a second steering gear, driven by a linear electric motor and linked to a second axle set of roadwheels, and a controller for operating said linear motor, with said controller comprising, detection means for detecting the operating position of said first steering gear, and signal generation means for generating a position signal for said linear motor based at least upon the detected position of said first steering gear.

9. A steering system for a vehicle according to Claim 8, wherein said linear electric motor comprises a plunger linked to said second axle set of roadwheels and a stator attached to the chassis of said vehicle.

10. A steering system for a vehicle according to Claim 8, wherein said first steering gear comprises a linear electric motor and said controller further comprises means for sensing torque applied to a steering shaft interposed between said first steering gear and a steering handwheel operated by the driver of said vehicle, means for sensing the velocity of said vehicle, and means for generating a control signal for the linear motor of said first steering gear based upon said sensed torque and velocity.

FIG.1

FIG.2

FIG.3

FIG. 4

FRONT STEERING GEAR
POSITION SENSOR — *58*

*60*

FRONT STEERING GEAR
TORQUE SENSOR

*56*

CONTROL MODULE

VELOCITY SENSOR

*62*

*44* RESOLVER

REAR
LINEAR MOTOR

FRONT
LINEAR MOTOR

*37*

*64*